Europäisches Patentamt

**European Patent Office**

**Office européen des brevets**

(11) Publication number: **0 034 403**
**A1**

# (12) EUROPEAN PATENT APPLICATION

(21) Application number: **81300179.9**

(22) Date of filing: **15.01.81**

(51) Int. Cl.³: **C 01 C 1/04**
**B 01 J 31/12**

(30) Priority: **17.01.80 US 112837**

(43) Date of publication of application:
**26.08.81 Bulletin 81/34**

(84) Designated Contracting States:
**BE DE FR GB IT NL**

(71) Applicant: **Ozyagcilar, Mehmet N.**
**Apartment 807 3145 Queen Frederica Drive**
**Mississauga Ontario L4Y3A7(CA)**

(72) Inventor: **Ozyagcilar, Mehmet N.**
**Apartment 807 3145 Queen Frederica Drive**
**Mississauga Ontario L4Y3A7(CA)**

(74) Representative: **Ritter, Stephen David et al,**
**Mathys & Squire 10 Fleet Street**
**London EC4Y 1AY(GB)**

(54) Method of making ammonia.

(57) A method of making ammonia by contacting nitrogen and hydrogen in synthesis proportions at synthesis conditions with a catalyst comprising hydrided titanium supported on a metal or inter-metallic compound capable of forming an unstable hydride. The catalyst may be prepared by alloying titanium or zirconium with a second metal capable of forming an inter-metallic compound with titanium under alloying conditions such as to produce said inter-metallic compound and free titanium in an amount effective when hydrided to catalyze the conversion of nitrogen and hydrogen to ammonia. The second metal may be selected from iron, nickel, cobalt, chromium, molybdenum, manganese and mixtures thereof. A stoichiometric excess of hydrogen is desirably used.

## METHOD OF MAKING AMMONIA

This invention relates to the synthesis of ammonia from molecular nitrogen and hydrogen utilizing a new catalyst and to novel processes based on the use of this catalyst.

### Background of the Invention

Ammonia is an important raw material in the chemical industry, particularly in the production of synthetic fertilizers. Agricultural research has shown that nitrogen is an indispensable ingredient of fertilizers for crops. The major source of that nitrogen at the present time is ammonia and one of the major goals of chemical technology in the fertilizer field is the production of ammonia at faster rates and with correspondingly lower costs.

Prior art methods for the production of ammonia from gaseous nitrogen and hydrogen have employed iron catalysts of various types. However, such catalysts require high temperatures and pressures necessitating expensive equipment of relatively low capacity and are rapidly consumed by various degradation mechanisms at the temperatures and pressures required.

In the industrial synthesis of ammonia the nitrogen component of the feed is derived from air whereas the hydrogen is commonly obtained as a synthesis gas through the reformation of natural gas or the gasification of naphtha and more recently from coal gasification. All of the foregoing processes for the production of hydrogen also produce oxides of carbon which are known to inhibit the ammonia synthesis reaction over the prior art iron catalysts, thus lowering the production capacity of the system. Furthermore, the presence of carbon monoxide in the gaseous mixture passed over an iron catalyst can lead to the formation of highly poisonous iron carbonyl compounds.

For the foregoing reasons of economy and safety the use of the prior art iron catalysts in ammonia synthesis requires the prior removal of carbon oxides from the feed stream and reduction of their concentrations to a level of not more than a few parts per million. To this end, the feed mixture is commonly passed over a nickel catalyst bed where the oxides of carbon react with hydrogen to form methane in a process known as methanation. This requirement for extremely low concentrations of carbon oxides in the feed where the prior art iron catalysts are used increases the cost of gas purification and hence the cost of production of the synthetic ammonia.

Research on the synthesis of ammonia has also progressed in the direction of room temperature synthesis in aqueous solutions where either biological "nitrogen-fixation" conditions are simulated, or a metal salt or complex is used as a catalyst together with a reducing agent. Although aqueous studies are still at the fundamental research level and have not yet been commercialized, it has been found that the metals of heterogeneous catalysts effective to synthesize ammonia at high temperatures from gaseous nitrogen and hydrogen also catalyze the ammonia synthesis when present as a salt or complex in aqueous solutions.

Although gaseous nitrogen and hydrogen theorectically can be combined at room temperature and atmospheric pressure to produce ammonia at an equilibrium yield of 95.5% on a thermodynamic basis, there is no catalyst or method for ammonia synthesis in the prior art that can be employed at room temperature to produce ammonia from gaseous nitrogen and hydrogen at commercially feasible rates. Therefore, it has been necessary to employ much higher temperatures in the synthesis of ammonia to achieve satisfactory reaction rates. The iron catalysts previously used produce no appreciable ammonia from gaseous nitrogen and hydrogen at temperatures below approximately 360°C. Even higher temperatures are therefore necessary for acceptable yields. However, higher temperatures in turn result in a drastic reduction in the thermodynamic equilibrium yield of the reaction due to its exothermic nature. Reductions in equilibrium yields with increasing temperatures can only be partly compensated for by increasing the operating pressure, and the pressures needed closely approach the design limits of the equipment presently available for industrial application.

Prior art processes for the synthesis of ammonia from gaseous nitrogen and hydrogen over commercial iron catalysts operate at temperatures around $500^{\circ}$C. The equilibrium yield of the reaction at this temperature with only one atmosphere of pressure is well below 0.1%. Higher pressures in the range of 150 atmospheres are therefore employed to compensate for the low yield at ambient pressure. Such high pressures result in high equipment and maintenance cost. Furthermore, equilibrium yields attained at such elevated pressures are usually less than 15%. This means that a substantial portion of the effluents from reactor vessels must be recycled one or more times, adding substantially to the cost of production both in the form of added equipment and longer operating times for separation and recycle of the product stream.

By reason of the foregoing thermodynamic and kinetic considerations, the cost of producing ammonia by prior art methods is relatively high and involves low production rates and the use of costly equipment.

### Objects of the Invention

It is a general object of the invention to provide a novel process for the manufacture of ammonia from hydrogen and nitrogen that overcomes the disadvantages outlined above.

It is another object of the invention to provide an ammonia synthesis process which gives higher yields than heretofore attainable.

It is a further object of the invention to provide a catalytic process for making ammonia from gaseous hydrogen and nitrogen at substantially increased rates of production.

0034403

- 4 -

Another object of the invention is to provide a commercially economic process for the production of ammonia from gaseous hydrogen and nitrogen at lower temperatures and pressures than heretofore possible and to thereby reduce the cost of process equipment and operating and maintenance costs associated therewith.

A still further object of the present invention is to provide a catalytic process capable of yielding higher rates of ammonia production at ambient temperatures than heretofore possible.

Another object of the invention is to provide a catalyst which will promote ammonia synthesis in aqueous solutions containing molecular hydrogen and nitrogen.

A still further object of the invention is the identification of a metal compound capable of weakening or breaking the inter-atomic bonds of nitrogen and hydrogen molecules and the utilization of such a compound as a catalyst for the production of ammonia from molecular hydrogen and nitrogen.

Another object of the invention is to provide a catalyst system for ammonia synthesis with a greater tolerance to various impurities normally present in a synthesis gas used in the ammonia manufacturing process.

Yet another object of the invention is a catalyst system which comprises compositions that in one embodiment may be used in powder form and in another embodiment may be easily supported upon a carrier to promote the catalytic reaction.

A still further object of the invention is to provide a commercial process for the catalytic production of ammonia wherein the cost of the catalyst itself is substantially less than the cost of prior art catalysts for such processes.

Other objects and advantages of the process will be in part obvious and in part pointed out hereafter.

BAD ORIG.

- 5 -

## Summary of the Invention

The objects and advantages of the present invention are achieved in general by contacting nitrogen and hydrogen in synthesis proportions under synthesis conditions to form ammonia using a catalyst which preferably comprises hydrided titanium supported on a metal or inter-metallic compound capable of forming unstable hydrides, more particularly, hydrides that are unstable at a temperature within the range of atmospheric temperature to about $100^{\circ}C$. As pointed out more fully below, before being used in the synthesis process, the catalyst is desirably activated by alternate hydriding and dehydriding steps to cause a partial physical disintegration of the catalyst and thereby increase its surface area. Also it has been found advantageous when employing the present catalyst to carry out the synthesis process using a stoichiometric excess of hydrogen, e.g., a molar excess of hydrogen of say 1% to 700%.

The novel catalyst of this invention for the first time allows the use of substantially lower operating temperatures and pressures in achieving commercially feasible production rates. At such temperatures and pressures equilibrium yields fall within the range of 30% to 60% and therefore actual yields are greatly improved. The reaction rates attainable with this catalyst at any given temperature and pressure are at least an order of magnitude, and sometimes several orders of magnitude, greater than reaction rates experienced with prior art catalysts and processes. Consequently, the cost of ammonia production is substantially lowered. Furthermore, equipment requirements are much less stringent and less costly by reason of the lower operating pressures that can be employed at the process temperature selected. In addition, the catalyst itself is free from many problems commonly encountered with prior art catalysts such as sintering and physical attrition.

To the contrary, it has been found that the catalytic activity of the catalyst employed in the present invention increases with aging in the presence of the hydrogen component of the reactant atmosphere. This enhancement of activity is a result of cracks and fissures formed in the catalyst particles, both microscopically (surface cracks) and macroscopically (breakage into smaller particles) with the attendant increase in the active surface area of the catalyst.

There is also much less poisoning or deactivation of the catalyst through the smothering of adsorbing sites by the adsorption of impurities that normally exist in commercially available nitrogen and hydrogen reactants. In particular, the catalysts of this invention exhibit much higher tolerance for the oxides of carbon that may be present in the feed stream compared with the requirements of prior art iron catalysts. It has been found that the interference of these compounds with a synthesis reaction over the catalysts of this invention is much less significant and there is little risk of carbonyl formation when carbon monoxide is present in small concentrations. In fact, any inhibitory effect by the carbon oxides is completely reversible so that with proper control of the process conditions, activation of the catalyst bed can continue concurrently with the production of the synthetic ammonia.

## General Description of Preferred Embodiment

As indicated above, the present catalysts comprise a titanium hydride and a support which may be either a metal or inter-metallic compound capable of forming unstable hydrides. As will be pointed out below, a wide variety of metals may be used as the supporting metal or in the supporting inter-metallic compound of the catalyst. However, the preferred support is an inter-metallic compound of iron and titanium.

The Fe/Ti alloy used in preparing the catalyst may be considered as comprising two phases, namely, (a) free titanium metal capable of being hydrided upon proper exposure to a hydrogen atmosphere and (b) an inter-metallic compound of iron and titanium in a 1:1 ratio that forms the support for the titanium metal, and after hydrogenation, for the titanium hydride.    The support or carrier of phase (b) may be a commercially available alloy having the desired 1:1 ratio obtainable, for example, from the International Nickel Company. This alloy is further described in a book entitled "Constitution of Binary Alloys", First Supplement, by R.P. Elliott, published by McGraw Hill, New York, N.Y., 1965 and a paper of Reilly et al referenced more fully below.    The carrier alloy is formed from relatively pure iron and titanium by a melting process requiring temperatures in the range of $1500^{\circ}$ to $1900^{\circ}$C.    Although the carrier can be made from commercial grade iron, the purity of electrolytic iron is preferred.

The supported catalyst comprising a separate titanium phase A may be made in the same way as the binary 1:1 alloy, since an · alloyed mixture containing more than 1 mole of titanium for each mole of  iron will produce a composition consisting of two phases, namely, the inter-metallic compound having a titanium to iron mole ratio of approximately 1:1 and pure titanium, the latter being converted to hydrided titanium in a hydriding step.    The titanium hydride formed in this step is a non-stoichiometric hydride which contains slightly less hydgrogen than the stoichiometric dihydride and may, for example, have the approximate formula $TiH_{1.98}$.    This titanium hydride is a relatively stable compound which remains as such throughout the production process and is continually activated (decontaminated) as long as it is in contact with significant amounts of hydrogen in the synthesis process.

Typical catalyst compositions comprising hydrided titanium supported upon a 1:1 iron/titanium inter-metallic compound that have been determined to have significant catalytic activity in the synthesis of ammonia from molecular hydrogen and nitrogen are listed as follows in the order of increasing activity for this reaction:    0.1 moles hydrided Ti to 1 mole Fe/Ti, 1 mole hydrided Ti to 1 mole Fe/Ti, and 2 moles hydrided Ti to 1 mole Fe/Ti.    Thus, the greater the amount of titanium supported upon the carrier compound- the greater the reaction rate and yield in the ammoria synthesis.

Although hydrided titanium appears to exhibit increased catalystic activity when alloyed with or otherwise supported on the iron-titanium bi-metallic compound, the catalytically active component is considered to be the hydrided titanium. For further information on the independent properties of each of these compounds, particular reference is made to the article entitled "Formation and Properties of Iron Titanium Hydride" by J.J. Reilly and R.H. Wiswall, Jr., of Brookhaven National Laboratory, published in Inorganic Chemistry, Vol. 13, No. 1, 1974, at pp. 218-222, and to the book by W.M. Mueller, et al., entitled Metal Hydrides as published by Academic Press, New York, N.Y., 1968.

The preparation of the hydrided catalyst and its activation will now be described.

Activation Procedure

The titanium/iron alloy used in preparing the preferred catalyst of the invention is usually received from the manufacturer in granular form. The granular material as received is coated with an oxide layer and in this state neither the titanium phase (a) nor the inter-metallic phase (b) can form a hydride. Also the granules have other surface and internal impurities such as carbon and nitrogen compounds and adsorbed gases other than hydrogen and nitrogen. Initial cleaning of the particles and formation of the catalyst containing the titanium in hydrided form is desirably accomplished by charging the granular material as received into a suitable reactor and subjecting it to hydrogen gas, preferably at temperatures in the range of $200^{\circ}$C. to $400^{\circ}$C. and at pressures in the range of 0 to 3000 p.s.i. preferably 150 to 200 p.s.i.g., for an extended period of time.

This initial exposure to hydrogen is followed by an outgassing step and then alternate pressurizing of the catalyst bed with hydrogen and outgassing so that phase (b) of the catalyst is successively hydrided and dehydrided. This process breaks up the catalyst granules into smaller particles and also produces multiple cracks in the surface of each individual granule, thereby greatly increasing the reactive surface area of the catalyst bed. The dehydriding step may be carried out at a temperature and hydrogen partial pressure that favors the decomposition of the hydride of phase (b) as determined by the thermodynamic equilibrium diagram of the inter-metallic compounds used. However, it is preferably carried out at or about 200°C. by drawing a slight vacuum of one or two inches of water on the reactor vessel containing the catalyst bed. Although the dehydriding may also be carried out by purging the reactor vessel with an inert gas such as helium, extreme care must be observed under such circumstances for the commercial grades of inert gases such as helium also contain oxygen at an impurity level which permanently poisons the catalyst by forming a stable oxide upon contact therewith at elevated temperatures.

The hydriding step may be carried out at a temperature and pressure that favors the formation of the hydride phase (b) as determined from the equilibrium conditions of the material used. Hydriding is preferably carried out at a temperature of 20° to 25°C. and at a pressure of the order of 1,000 psia.

Any commercially available grade of hydrogen gas may be used in the activation process. However, the use of relatively high purity hydrogen permits the attainment of acceptable activation in a fewer number of cycles. Whether a less expensive grade of hydrogen or faster activation of the catalyst is desirable from the point of view of process economics, will depend upon the conditions at a given manufacturing plant.

If the hydrogen gas used in the activation process is less than 99.999% pure, then a high temperature hydrogen treatment step between the dehydriding and hydriding steps should be incorporated in the activation cycle. This added step is essentially the same as the initial hydrogen treatment and in this case removes the gases such as the impurities in the hydrogen gas used that become adsorbed on the catalyst particles during the hydriding step. Therefore, following the dehydriding step the reactor is filled with hydrogen gas at a temperature of about 200° to 400°C. and a pressure of approximately 150 to 200 psia preferably for four to six hours. Following this high temperature hydgrogen treatment the hydrogen gas is again evacuated from the reactor by drawing a vacuum and the catalyst bed is cooled to $20^{\circ}$ to $25^{\circ}$C. Upon reaching this temperature level, the reactor is pressurized with hydrogen gas at about 1000 psia and kept at these conditions until phase (b) is completely hydrided. The extent to which the hydroding reaction has proceeded may be followed by monitoring either temperature or pressure changes in the reactor and noting the time at which these parameters return to their initial values. Alternatively, the hydriding can be continued for a specific period of time, e.g., one-half hour.

After the hydriding reaction is completed the hydrogen is drawn off from the reactor by applying a vacuum until the pressure in the reactor is approximately one to two inches of water and concurrently the catalyst bed is heated to $200^{\circ}$C. in order to dehydride phase (b). The foregoing hydriding-dehydriding cycle is carried out until phase (b) of the catalyst is capable of being hydrided and dehydrided very rapidly. In the case of catalyst compositions that are to be prepared in powdered form, the hydriding and dehydriding cycles are continued until the desired particle size is attained.

### The Ammonia Synthesis Process

The catalyst prepared as described is charged to a suitable reactor and a gaseous feed stream comprised of nitrogen and hydrogen is continually passed over the catalyst bed in the reactor at a temperature and pressure selected for the highest or other desired level of yield of ammonia in the product. Although significant yields of the product are obtainable at temperatures within the range $100^{\circ}$C. to $550^{\circ}$C. and pressures as low as atmospheric, commercially useful yields generally require high temperatures in the range of $250^{\circ}$ to $350^{\circ}$C. The reactor pressure may range from 1 to 200 atmospheres with the preferred range being 30 to 100 atmospheres. Even greater temperatures and pressures would further increase reaction rates, but such operations appear to be limited at the present time by restrictions imposed by design parameters of the process equipment available. In addition, higher temperatures could also have an adverse effect on the ammonia synthesis reaction by increasing the rate of ammonia dissociation into nitrogen and hydrogen to unacceptable levels. In other words, excessively high temperatures could reverse the synthesis reaction because of thermodynamic limitations arising from the exothermic nature of the reaction. However, at temperatures and pressures within the ranges specified above, yields approaching 100% of theoretical are attainable.

As indicated above, it has been found advantageous to carry out the ammonia synthesis using a stoichiometric excess of hydrogen, preferably a hydrogen/nitrogen ratio of say 4:1 to 20:1. The use of excess hydrogen provides a number of advantages. Thus, it not only improves the yield and production rate of ammonia, but also results in the elimination of trace amounts of elemental oxygen and/or oxides of carbon that may be present as impurities in the feed gas. Also it maintains the catalytic surfaces of the catalyst cleaner. Further, it prolongs the life of the catalyst by providing a certain amount of concurrent reactivation as the synthesis reaction proceeds. Still further, the use of excess hydrogen permits the reaction to be carried out at a lower temperature and because of the thermodynamics of the system, a more favorable equilibrium can thereby be achieved.

The product stream is withdrawn from the reactor continuously at a flow rate determined by the space velocity which may be as much as say 500 cubic meters per hour per ton of catalyst under standard temperature and pressure conditions. Higher space velocities and corresponding feed rates are also possible, but may give lower yields and would require higher pumping energy inputs. Nevertheless, faster throughput and lower yields may be more economical overall depending on the optimum parameters of the separation and recycle equipment employed to handle the product downstream of the reactor vessel.

The product stream leaving the catalyst bed will contain the nitrogen and hydrogen reactants and the ammonia product. If desired, the ammonia can be separated from the product stream in conventional fashion and the reactants recycled to the reactor vessel. One such separation scheme involves cooling the product stream to a temperature in the range of $25^{\circ}C$. to $100^{\circ}C$., which is usually low enough to totally condense the ammonia product and then passing the stream through a condensate separator and recycling the gas effluent consisting of the uncombined nitrogen and hydrogen back to the reactor. Actual condensate temperature in this case is determined by the process economics, taking into account the cooling, heating and pumping operations required, as well as the partial pressure of the ammonia in the product stream. Some of the ammonia product might also be recycled, depending on the parameters of the separation equipment.

### Detailed Description of Preferred Embodiment

A somewhat more detailed description of a preferred mode of carrying out the present invention will now be described. A conventional reactor vessel such as that presently used in the production of ammonia with prior art catalysts is charged with as purchased particles of titanium and iron alloyed at a ratio of 2:1 and of less than 16 mesh to form a particulate bed therein. The alloy charged contains a titanium metal phase (a) supported on iron titanium 1:1 inter-metallic compound phase (b), the composition of the latter being substantially FeTi with approximately one mole of titanium for each mole of FeTi carrier. The reactor is then heated and out-gassed by drawing a vacuum of one to two inches of water on the vessel and is heated to and maintained at $325^{\circ}C$. for approximately 6 to 8 hours to desorb and expel contaminant gases. Following the vacuum treatment and while maintaining the vessel at $325^{\circ}C$. the reactor is pressurized with hydrogen to 200 psi and maintained at this temperature and pressure for 4 to 6 hours. Titanium dihydride may form at this stage with evolution of heat sufficient to raise the temperature of the bed to $100^{\circ}C$. or so. Therefore, care must be exercised in carrying out this hydrogen treatment to prevent excessive temperature increases. Depending upon the design parameters of the reactor vessel and the catalyst bed, it may be preferable to carry out this step with a static mass of gas in contact with the bed rather than a flow of gas therethrough.

The supported catalyst as thus produced is then activated in the manner described above. The reactor is cooled to near ambient temperature, say 20° to 25°C. while continuously reducing the pressure on the bed to a value somewhat below atmospheric pressure to outgas the hydrogen. Upon reaching ambient temperature, the reactor is then pressurized again with hydrogen to a pressure above the equilibrium dissociation pressure of the hydride formed of the iron/titanium carrier at the prevailing temperature. A hydrogen pressure of 1,000 psia is sufficient to accomplish this hydriding step at the usual ambient temperatures encountered. After such pressurization has been maintained for approximately one-half hour, the reactor is again heated to approximately 400°C. and immediately allowed to cool upon reaching that temperature while maintaining a vacuum throughout the heating and cooling cycle to outgas the hydrogen in the dehydriding step. As pointed out above, these hydriding and dehydriding cycles break up the catalyst particles without destroying the integral bond between the titanium dihydride phase and the inter-metallic compound phase. They are preferably repeated until the desired particle size is attained, which usually requires three to four cycles, depending upon the original particle size and the dimensions of the catalyst bed. The catalyst is then ready for the production reaction.

Following the last dehydriding step of the size reduction process, the reactor is heated to 300°C and pressurized with hydrogen to 80 atmospheres. A reactant composition comprising hydrogen and nitrogen in a 10:1 mole ratio is then introduced into the reactor and the product stream is drawn off on a continuous basis at a flow rate determined by the space velocity. Separation of the ammonia product and recycle of unreacted starting material are carried out as previously described.

## Other Embodiments of the Invention

Although a single embodiment of the present invention has been described, other useful embodiments and variations of the catalyst compociton, the mode of preparation and treatment of the catalyst and synthesis steps will be apparent to those skilled in the art. As indicated above, the catalyst may broadly comprise a hydrided metal and a support comprising a metal or inter-metallic compound characterized by the fact that it is capable of forming an unstable hydride. The hydrided metal may be hydrided titanium as described in detail above, or alternatively hydrided zirconium. Of the elemental metals that may be used as a support, vanadium, zirconium and niobium may be mentioned. A considerable number of inter-metallic compounds may be used, including compounds of titanium with metal selected from the group consisting of iron, nickel, cobalt, chromium, molybdenum and manganese. Among the specific inter-metallic compounds that may be mentioned are those of the following formulas: $FeTi$, $NiTi_2$, $TiCo$, $TiCr_2$, $ZrNi_2$, $ZrMo_2$, $ZrFe_2$, $ZrCo_2$, $ZrMn_2$, $TiFe_{0.8}Mn_{0.2}$, $TiFe_{0.9}V_{0.1}$, $TiFe_{0.8}Cr_{0.2}$, $TiFe_{0.8}Mo_{0.2}$, $TiCo_{0.8}Mn_{0.2}$, $TiCo_{0.9}Fe_{0.1}$, $TiCo_{0.8}V_{0.2}$, $TiCo_{0.9}Ni_{0.1}$, $TiCo_{0.8}V_{0.2}$, $TiCo_{0.9}Ni_{0.1}$, $TiCr_{1.8}Fe_{0.2}$, $TiCr_{1.8}V_{0.2}$, $TiCr_{1.7}Mo_{0.3}$, $VTi_2$, $NiTi_3$, $CoTi_2$ and $CrTi$.

Other examples of inter-metallic compounds capable of forming hydrides that are unstable at temperatures up to $100^{\circ}C$. can be found in the literature.

Other variations within the scope of the invention involve combining titanium dihydride with known catalytically active metals for this reaction such as ruthenium and osmium either in the form of mixtures of multi-component (e.g. ternary, quaternary or higher) alloys, or supporting this catalyst upon other inter-metallic compounds or on an inert carrier material or other substrate. As to process variations there may be mentioned that the hydrogen and nitrogen reactants may be contacted with the catalyst while in physical states other than a gas. Thus, aqueous solutions and other carriers containing free nitrogen and hydrogen may be passed over or in contact with the catalyst and the hydrogen and nitrogen thereby reacted to produce ammonia. All such processes are within the contemplation of the present invention.

By way of further example. activation of the catalyst can be achieved, although at a slower rate, by exposing the catalyst to hydrogen in the feed stream of the ammonia synthesis process itself, particularly, if the product stream is recycled until a desired level of ammonia is achieved.    It is therefore to be understood that the foregoing specification is not intended to be limited to the preferred embodiment of the invention described and that other embodiments are contemplated within the scope of the appended claims.

1. A method of making ammonia which comprises contacting nitrogen and hydrogen in synthesis proportions at synthesis conditions with a catalyst comprising hydrided titanium supported on a metal or inter-metallic compound capable of forming an unstable hydride.

2. A method of making ammonia which comprises contacting nitrogen and hydrogen in synthesis proportions at synthesis conditions with a catalyst comprising hydrided titanium supported on a metal or inter-metallic compound capable of forming hydrides that are unstable at atmospheric temperature.

3. A method of making ammonia which comprises contacting nitrogen and hydrogen in synthesis proportion at synthesis conditions with a catalyst comprising hydrided titanium supported on an inter-metallic compound capable of forming an unstable hydride.

4. A method according to claim 3 wherein said catalyst is made by preparing a composition comprising free titanium and said inter-metallic compound and exposing said composition to hydrogen at an elevated temperature to convert free titanium thereof to hydrided titanium.

5. A method according to claim 4 wherein said catalyst is activated by alternately hydriding it at ambient temperature and dehydriding it at an elevated temperature to increase the surface area of said catalyst.

6. A method according to claim 5 wherein said catalyst is hydrided at a pressure above atmospheric and dehydrided at a pressure below atmospheric.

7. A method according to claim 1 wherein the molar ratio of hydrogen to nitrogen is greater than 3:1.

8. A method according to claim 7 wherein the hydrogen and nitrogen are present in such proportions that there is a stoichiometric molar excess of hydrogen of 1% to 700%.

9. A method according to claim 8 in which the molar ratio of hydrogen to nitrogen is from about 20:1 to about 4:1.

10. A method according to claim 3 wherein the inter-metallic compound is a compound of titanium or zirconium with a metal selected from the group consisting of iron, nickel, cobalt, chromium, molybdenum and manganese.

11. A method according to claim 10 and wherein the inter-metallic compound is a compound of titanium and iron.

12. A method according to claim 11 and wherein the molar ratio of titanium to iron in the inter-metallic compound is about 1:1.

13. A method of making ammonia which comprises contacting nitrogen and hydrogen in synthesis proportions at synthesis conditions with a catalyst prepared by alloying titanium with a second metal capable of forming an inter-metallic compound with titanium under alloying conditions such as to produce an inter-metallic compound of titanium and said second metal as well as free titanium in an amount effective when hydrided to catalyst the conversion of nitrogen and hydrogen to ammonia, and then exposing the alloy of said second metal and titanium to hydrogen under hydriding conditions such as to hydride at least a portion of said free titanium.

14. A method according to claim 13 wherein the ratio of hydrogen to nitrogen is in excess of that stoichiometrically required to produce ammonia.

15. A method according to claim 13 in which said second metal is selected from iron, nickel, cobalt, chromium, molybdenum and manganese.

16. A method according to claim 13 wherein said hydriding conditions are such as to remove oxides from the surface of said alloy.

17. A method according to claim 13 wherein said inter-metallic compound is a compound of titanium and iron.

18. A method of making ammonia which comprises contacting a mixture of hydrogen and nitrogen in synthesis proportions at synthesis conditions with a catalyst comprising hydrided titanium supported on an inter-metallic compound capable of forming an
unstable hydride, said inter-metallic compound being a compound of
titanium and a metal selected from nickel, cobalt, chromium, molybdenum and manganese.

19. A method of making ammonia which comprises contacting
a mixture of hydrogen and nitrogen in synthesis proportions at
synthesis conditions with a catalyst comprising hydrided zirconium
supported on an inter-metallic compound capable of forming an
unstable hydride.

20. A method of making ammonia which comprises contacting
a mixture of hydrogen and nitrogen in synthesis proportions at
synthesis conditions with a catalyst comprising hydrided titanium
supported on an inter-metallic compound capable of forming an
unstable hydride, the molar ratio of hydrogen to nitrogen being greater
than 3:1.

0034403

European Patent
Office

**EUROPEAN SEARCH REPORT**

Application number

EP 81 30 0179

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | FR - A - 2 391 158 (THE RAFEL INDUSTRIAL GROUP)<br>* Page 13, lines 1-15; 23-30, 35-40; page 9, lines 2-40; page 10, lines 1-31; page 11, lines 30-40 *<br>-- | 1,3-7, 10-13, 15-17 | C 01 C 1/04<br>B 01 J 31/12 |
| A | FR - A - 2 411 804 (DEREK) | | |
| A | DE - A - 2 246 754 (DAIMLER-BENZ)<br>---- | | TECHNICAL FIELDS SEARCHED (Int. Cl.³)<br><br>C 01 C 1/04<br>B 01 J 31/12 |

CATEGORY OF
CITED DOCUMENTS

X: particularly relevant
A: technological background
O: non-written disclosure
P: intermediate document
T theory or principle underlying the invention
E conflicting application
D. document cited in the application
L citation for other reasons

& member of the same patent family
corresponding document

The present search report has been drawn up for all claims

| Place of search | Date of completion of the search | Examiner |
|---|---|---|
| The Hague | 11-05-1981 | STEELANDT |

EPO Form 1503.1 06.78